(19) 

**Europäisches Patentamt**
**European Patent Office**
**Office européen des brevets**

(11) **EP 4 779 854 A1**

(12) **EUROPEAN PATENT APPLICATION**

(43) Date of publication:
22.07.2026 Bulletin 2026/30

(21) Application number: 26150871.7

(22) Date of filing: 08.01.2026

(51) International Patent Classification (IPC):
*H02M 1/12* (2006.01)     *H02M 1/42* (2007.01)
*H02M 7/217* (2006.01)

(52) Cooperative Patent Classification (CPC):
H02M 1/4225; H02M 1/12; H02M 7/217

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH LA MA MD TN**

(30) Priority: 15.01.2025 CN 202510061363

(71) Applicant: Lian Zheng Electronics (Shenzhen)
Co., Ltd.
Shenzhen, Guangdong 518101 (CN)

(72) Inventors:
• FENG, Zicheng
Shenzhen 518101 (CN)
• LIU, Kai
Shenzhen 518101 (CN)
• WU, Yiping
Shenzhen 518101 (CN)
• QIN, Hu
Shenzhen 518101 (CN)

(74) Representative: Jolliffe, Jack Louis et al
Venner Shipley LLP
TIDE Bankside
8 Emerson Street
London SE1 9DU (GB)

(54) **CONTROL METHOD FOR AC-DC CONVERSION CIRCUIT OF ELECTRICAL EQUIPMENT AND ELECTRICAL EQUIPMENT**

(57) The present invention provides a control method for an AC-DC conversion circuit of an electrical equipment and an electrical equipment. The control method includes voltage loop control and current loop control, where the voltage loop control provides a current instantaneous instruction value based on a comparison between a bus voltage sampled value and a bus voltage set value of the AC-DC conversion circuit, the current loop control provides a PWM control signal for the AC-DC conversion circuit based on a comparison between an inductor current sampled value of the AC-DC conversion circuit and the current instantaneous instruction value, the voltage loop control includes a coefficient adjustment step, and the coefficient adjustment step dynamically adjusts a coefficient K in the voltage loop control based on a load amount of the electrical equipment.

Fig. 1

EP 4 779 854 A1

**Description**

TECHNICAL FIELD

The present invention belongs to the field of power supplies, and in particular, to a control method for an AC-DC conversion circuit of an electrical equipment and an electrical equipment.

BACKGROUND

The statements in this part are merely intended to provide background information related to the present invention, to help understand the present invention. The background information does not necessarily constitute the prior art.

An uninterruptible power supply (UPS) is a power protection device that is configured to instantaneously switch to providing continuous power to a load from a backup power supply (e.g., a rechargeable battery) when a primary power supply (e.g., a municipal power grid) is not in a normal state, to protect the load from damage due to power interruption of the primary power supply.

A constant voltage and constant frequency (CVCF) mode is an important working mode of a UPS. In this working mode, the UPS ensures that an output voltage and an output frequency remain constant and are not affected by fluctuations of an input power supply, thereby providing stable and reliable power for a load. However, in this CVCF mode, different frequencies of the input voltage and the output voltage cause a power factor correction circuit (PFC) input current of the UPS to contain a low-frequency component, thereby generating input current harmonics. To reduce the input current harmonics, a bandwidth of a PFC voltage control loop usually needs to be reduced. However, reducing the bandwidth of the PFC voltage control loop causes a switching transistor to withstand a relatively large current stress, which may cause damage and shortening of the lifetime of the switching transistor in the PFC, and also increase costs of the switching transistor and even that of the PFC.

SUMMARY

Therefore, an objective of the present invention is to overcome the foregoing disadvantages of the prior art, and provide a control method for an AC-DC conversion circuit of an electrical equipment. The control method includes voltage loop control and current loop control, where the voltage loop control provides a current instantaneous instruction value based on a comparison between a bus voltage sampled value and a bus voltage set value of the AC-DC conversion circuit, the current loop control provides a PWM control signal for the AC-DC conversion circuit based on a comparison between an inductor current sampled value of the AC-DC conversion circuit and the current instantaneous instruction value, where the voltage loop control includes a coefficient adjustment step, and the coefficient adjustment step dynamically adjusts a coefficient K in the voltage loop control based on a load amount of the electrical equipment.

According to the control method of the present invention, preferably, in the voltage loop control, the current instantaneous instruction value is provided based on a product of the coefficient K and a difference between the bus voltage sampled value and the bus voltage set value, and the coefficient K is dynamically adjusted based on a variation of the load amount of the electrical equipment.

According to the control method of the present invention, preferably, the coefficient adjustment step includes:

collecting a present load amount of the electrical equipment at intervals of a first preset duration, and determining whether a variation of the load amount is greater than or equal to a preset threshold; when the variation of the load amount is greater than or equal to the preset threshold, setting the coefficient K to an initial coefficient to update the coefficient K; and

when the variation of the load amount is less than the preset threshold, calculating and updating the coefficient K based on the present load amount.

According to the control method of the present invention, preferably, the variation of the load amount is equal to an absolute value of a difference between the present load amount and a reference load amount.

According to the control method of the present invention, preferably, when the coefficient K is updated, the present load amount is used as an updated reference load amount for a next determining cycle.

According to the control method of the present invention, preferably, when a duration in which the variation of the load amount is less than the preset threshold reaches a second preset duration, the coefficient K is calculated and updated based on the present load amount.

According to the control method of the present invention, preferably, the load amount includes a load power, a load current, and a load percentage of the electrical equipment.

According to the control method of the present invention, preferably, when the variation of the load amount is less than the preset threshold, the coefficient K is calculated according to the following formula:

$$K = K0 - A \times Pc,$$

where K0 is the initial coefficient, Pc is the present load amount, and A is a conversion parameter, and where the conversion parameter is calculated according to the following formula:

$$A=K0/Pm,$$

where Pm is a maximum load amount allowed by the electrical equipment.

According to the control method of the present invention, preferably, the first preset duration is a half cycle or one cycle of an output voltage of the electrical equipment.

According to another aspect, the present invention further provides an electrical equipment. The electrical equipment includes an AC-DC conversion circuit and a controller for controlling the AC-DC conversion circuit, where the controller is configured to execute the control method according to the present invention.

Compared with the prior art, in the control method of the present invention, the coefficient K in the voltage loop control is dynamically adjusted based on a value and a duration of a load amount, thereby resolving a problem that a steady-state harmonic current and a dynamic input current of a UPS are excessively large in a CVCF mode, reducing a requirement on a switching component, and reducing hardware costs.

BRIEF DESCRIPTION OF DRAWINGS

The following further describes embodiments of the present invention with reference to the accompanying drawings, where:

Fig. 1 is a structural block diagram of a UPS according to an embodiment of the present invention;
Fig. 2 shows a circuit topology and current paths in different cases of a PFC module according to an embodiment of the present invention;
Fig. 3 is a structural block diagram of a PFC controller according to an embodiment of the present invention;
Fig. 4 is a schematic working flowchart of a coefficient adjustment module according to an embodiment of the present invention;
Fig. 5 is a diagram of a relationship between a coefficient and a load percentage according to an example of the present invention;
Fig. 6 is a test result of input current harmonics;
Fig. 7 is an input current waveform when a 113% RCD load is frequently loaded and unloaded with a coefficient K=0.33; and
Fig. 8 is an input current waveform when a 113% RCD load is frequently loaded and unloaded with a coefficient K=1.

DETAILED DESCRIPTION

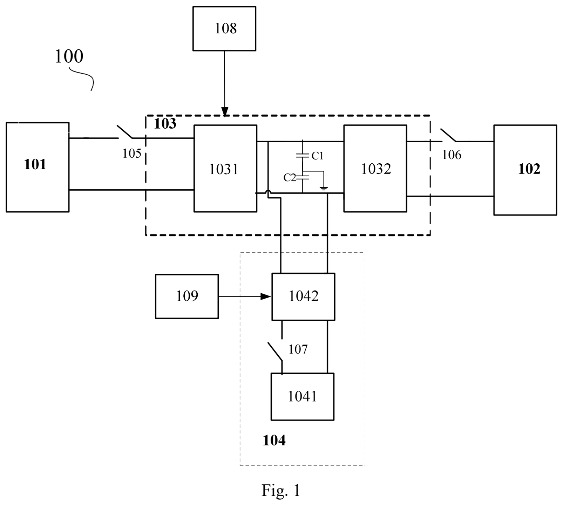

To make the objectives, technical solutions, and advantages of the present invention clearer, the following further describes the present invention in detail through specific embodiments with reference to the accompanying drawings. It should be understood that the specific embodiments described herein are merely intended to explain the present invention, and are not intended to limit the present invention. The embodiments of the present invention are applicable to any electrical equipment that is well-known in the art and that includes an AC-DC conversion circuit. In the present invention, a UPS is used as an example for description. Referring to a structural block diagram of the UPS in the embodiment shown in Fig. 1, the UPS 100 includes an input terminal 101, an output terminal 102, a power conversion branch 103, a battery branch 104, a primary input switch 105, a primary output switch 106, a power conversion branch controller 108, and a battery branch controller 109, where the power conversion branch 103 includes a first power conversion module (which may also be referred to as a power factor correction (PFC) module, a rectifier module, or an AC-DC converter in the present invention) 1031 and a second power conversion module (which may also be referred to as an inverter module or a DC-AC converter in the present invention) 1032 that are sequentially connected between the input terminal 101 and the output terminal 102; and the battery branch 104 includes a rechargeable battery 1041, a third power conversion module (which may also be referred to as a battery conversion module, a battery discharge module, or a first DC-DC converter in the present invention) 1042, and a switch 107 connected between the rechargeable battery 1041 and the third power conversion module 1042. In addition, bus capacitors (also referred to as BUS capacitors) C1 and C2 are also connected between direct current buses, and a node between the bus capacitors C1 and C2 is grounded. In another embodiment, only one bus capacitor is disposed between positive and negative direct current buses. A person skilled in the art can understand that the UPS 100 may further include a bypass branch, a fourth power conversion module (which may also be referred to as a battery charging module or a second DC-DC converter in the present invention), a bypass branch controller, and the like (not shown in the figure). In addition, a battery charging function may also be implemented by using the battery conversion module 1042, for example, a bidirectional DC-DC converter is used. In an embodiment, the power conversion branch controller 108, the battery branch controller 109, and a possible bypass branch controller are controllers independent of each other. In another embodiment, the power conversion branch controller 108, the battery branch controller 109, and a possible bypass branch controller are integrated into a control chip, and are implemented as different control modules in the control chip.

When the mains supply is normal, the primary input switch 105 and the primary output switch 106 are turned on, and the power conversion branch controller 108 works. The power conversion branch controller 108 controls the first power conversion module 1031 to perform AC-DC conversion on an alternating current (e.g., the mains supply) input at the input terminal 101 and then provide a converted direct current to the direct current buses, and then controls the second power conversion module 1032 to perform DC-AC conversion on a direct current bus voltage and then provide a converted alternating current voltage to a load through the output terminal 102. If a fault occurs in the power conversion branch 103, the primary input switch 105 is controlled to turn off, the bypass branch controller controls the bypass branch to conduct, and the mains supply supplies power to the load through the bypass branch.

When a fault occurs in the mains supply, the primary input switch 105 is turned off, the switch 107 and the primary output switch 106 are turned on, and the power conversion branch controller 108 and the battery branch controller 109 work. The battery branch controller 109 controls the third power conversion module 1042 to perform direct current conversion on a direct current provided by the rechargeable battery 1041 and then provide a converted direct current to the direct current buses, and then the power conversion branch controller 108 controls the second power conversion module 1032 to perform DC-AC conversion on the direct current bus voltage and then provide a converted alternating current voltage to the load through the output terminal 102.

Preferably, the power conversion branch controller 108 includes separate controllers configured to control the first power conversion module 1031 and the second power conversion module 1032, respectively.

Common AC-DC converters, DC-DC converters, and DC-AC converters use controllable switches (such as transistors) to control the flow of current. Such converters implement voltage conversion by controlling the turn-on and turn-off of the controllable switches, so that higher efficiency and better output voltage stability can be provided. Common switching converters include Buck converters, Boost converters, Buck-Boost converters, and isolation converters (such as forward converters, flyback converters, half-bridge converters, and full-bridge converters), and the like. In the embodiment of the present invention, the power conversion branch controller 108 and the battery branch controller 109 separately control the turn-on and turn-off of transistors in the first power conversion module 1031, the second power conversion module 1032, and the third power conversion module 1042 to implement AC-DC conversion, DC-AC conversion, and DC-DC conversion. In particular, the power conversion branch controller 108 and the battery branch controller 109 respectively provide pulse width modulation (PWM) control signals to the transistors in respective power conversion modules.

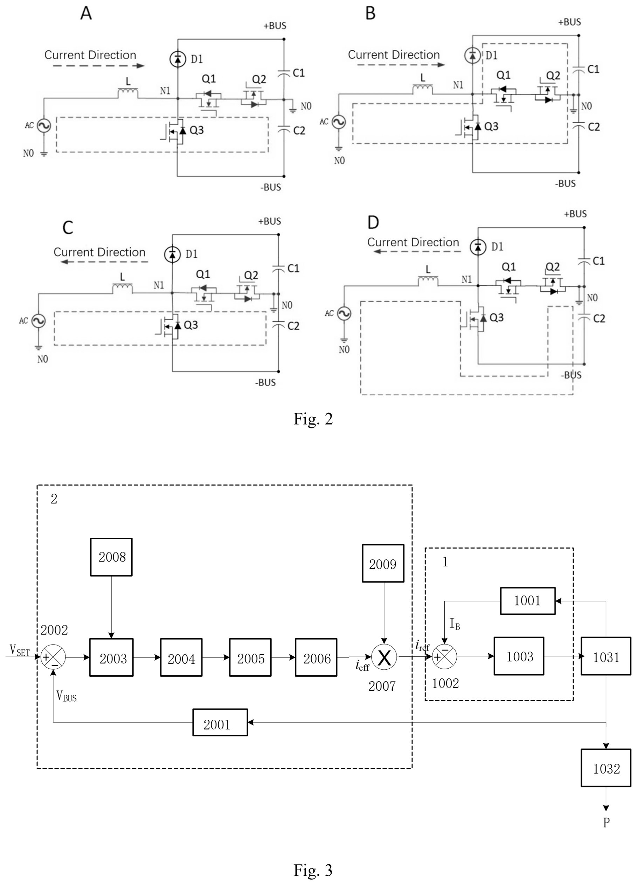

Fig. 2 shows a circuit topology and current paths in different cases of a PFC module according to an embodiment of the present invention. In Fig. 2, figure A and figure B show current paths in a positive half cycle of an alternating current (e.g., the mains supply), and figure C and figure D show current paths in a negative half cycle of the alternating current. The PFC module includes an inductor L, a first transistor Q1, a second transistor Q2, a third transistor Q3, a diode D1, and a first capacitor C1 and a second capacitor C2, which constitute a T-type topology. Specifically, an anode of the diode D1 is connected to a first terminal of the third transistor Q3 and a first terminal of the inductor L, a cathode of the diode D1 is connected to a positive current bus +BUS, a second terminal of the third transistor Q3 is connected to a negative direct current bus -BUS, a second terminal of the inductor L is connected to an alternating current power supply AC, and the first transistor Q1 and the second transistor Q2 are connected in reverse series between a neutral line N0 and a node N1 between the diode D1 and the third transistor Q3. In addition, the first transistor Q1, the second transistor Q2, and the third transistor Q3 are each connected in reverse parallel with a built-in body diode. In the embodiment of the present invention, connecting two transistors in reverse series means that two transistors of the same type are connected in a reverse manner. For example, a source of the first transistor Q1 is connected to a source of the second transistor Q2, or a drain of the first transistor Q1 is connected to a drain of the second transistor Q2. The purpose of connecting two transistors in reverse series is to prevent the series circuit from conducting through respective body diodes of the two transistors.

When the alternating current is in the positive half cycle, the power conversion branch controller 108, preferably the PFC controller, controls the second transistor Q2 to keep on, the third transistor Q3 to keep off, and the first transistor Q1 to turn on and off alternately. As shown in figure A of Fig. 2, when the first transistor Q1 is turned on, a current path (as shown by a dashed line in the figure) sequentially passes through the inductor L, the first transistor Q1, and the second transistor Q2 from the alternating current power supply AC in a direction shown by an arrow to reach the neutral line N0, and the alternating current power supply AC stores energy in the inductor L. As shown in figure B of Fig. 2, when the first transistor Q1 is turned off, a current path (as shown by a dashed line in the figure) sequentially passes through the inductor L, the diode D1, and the first capacitor (a positive direct current bus capacitor) C1 from the alternating current power supply AC in a direction shown by an arrow to reach the neutral line N0, and the alternating current power supply AC is connected in series with the inductor L to perform boost charging for the positive direct current bus +BUS.

When the alternating current is in the negative half cycle, the power conversion branch controller 108, preferably the PFC controller, controls the first transistor Q1 to keep on, and performs complementary pulse width modulation on the second transistor Q2 and the third transistor Q3. As shown in figure C of Fig. 2, when the second transistor Q2 is turned on and the third transistor Q3 is turned off, a current path (as shown by a dashed line in the figure) sequentially passes through the second transistor Q2, the first transistor Q1, and the inductor L from the neutral line N0 in a direction shown by an arrow to reach the alternating current power supply AC, and the alternating current power supply AC stores energy in the inductor L. As shown in figure D of Fig. 2, when the second transistor Q2 is turned off and the third transistor Q3 is turned on, a current path (as shown by a dashed line in the figure) sequentially passes through the second capacitor (a negative direct current bus capacitor) C2, the third transistor Q3, and the inductor L from the neutral line N0 in a direction shown by an arrow to reach the alternating current power supply AC, and the alternating current power supply AC is connected in series with the inductor L to perform boost charging for the negative direct current bus -BUS.

The T-type PFC circuit topology shown in Fig. 2 is merely exemplary rather than limiting. In the embodiment of the present invention, the PFC module may use any circuit topology that is well-known in the art and that can implement AC-DC conversion. For different circuit topologies, although on-off logic of transistors of the PFC module is different, it is known to a person skilled in the art, and details are not described again.

An embodiment of the present invention provides a controller and a corresponding control method for a PFC circuit, where a PFC control parameter is dynamically adjusted based on a load amount of a UPS, for example, an output power (i.e., an output power of the inverter module 1032 of the UPS or a load power of the UPS) or an output current (i.e., an output current of the inverter module 1032 of the UPS or a load current of the UPS) of the UPS. Referring to a structural block diagram of a PFC controller in an embodiment shown in Fig. 3, the PFC controller includes a current loop control unit 1 and a voltage loop control unit 2, where the voltage loop control unit 2 is configured to provide a current instantaneous instruction value for the current loop control unit 1 based on a comparison between a bus (BUS) voltage set value and a BUS voltage sampled value, where a coefficient of voltage loop control is dynamically adjusted based on an output power of a UPS, and specifically the current instantaneous instruction value is provided based on a product of the coefficient and a difference between the BUS voltage sampled value and the BUS voltage set value, where the coefficient is dynamically adjusted based on a variation of a load amount of the UPS; and the current loop control unit 1 is configured to provide a pulse width modulation (PWM) control signal for a controllable switch of the PFC circuit based on a comparison between the current instantaneous instruction value and an inductor current sampled value (also referred to as an inductor current actual value) of the PFC circuit, and specifically adjust a duty ratio of the PWM control signal. Preferably, an inductor of the PFC circuit is an input inductor of the PFC circuit.

The current loop control unit 1 includes:

a current sampling module 1001, configured to collect an inductor current of the PFC circuit and provide a current sampled value $I_B$;

a first comparison module 1002, configured to compare the current instantaneous instruction value $i_{ref}$ with the inductor current sampled value $I_B$ and provide a difference between the two, $\Delta_i = i_{ref} - I_B$, the first comparison module 1002 is preferably an adder or a subtractor; and

a current loop control module 1003, providing a PWM signal for a PFC module 1031 based on a difference between the current instantaneous instruction value $i_{ref}$ and the inductor current sampled value $I_B$, and adjusting a duty ratio of the PWM signal to adjust an input current of the PFC module, and then adjusting an output power P of the UPS. For example, when the inductor current sampled value $I_B$ is less than the current instantaneous instruction value $i_{ref}$, the duty ratio of the PWM signal is increased to increase the input current of the PFC module 1031, and then increase an inverter output power P. Preferably, the current loop control module 1003 includes a PI adjustment module that can perform proportional and integral operations on a current error, to implement fast response and control without steady-state error.

In another embodiment, the current sampling module 1001 is a separate module independent of the current loop controller 1.

The voltage loop control unit 2 includes:

a direct current bus voltage sampling module 2001, configured to collect a direct current bus voltage (also referred to as a bus voltage sampled value) $V_{BUS}$ of the PFC circuit, where the direct current bus voltage may be a positive direct current bus voltage or a negative direct current bus voltage;

a second comparison module 2002, configured to compare a BUS voltage set value $V_{SET}$ with a BUS voltage sampled value $V_{BUS}$ and provide a voltage difference between the two, $\Delta_v = V_{SET} - V_{BUS}$, the second comparison module 2002 is preferably an adder or a subtractor;

a coefficient adjustment module 2003, configured to introduce a coefficient K to a voltage difference signal $\Delta_v$ and adjust the coefficient K in real time based on a load amount (e.g., a load power or a load current) of the UPS, where an output voltage signal of the coefficient adjustment module 2003 is controlled to be

$$\Delta'_v = K \times \Delta_v = K \times (V_{SET} - V_{BUS})$$ ; and in

a further preferred embodiment, the load amount is a load percentage, the coefficient K is adjusted in real time based on the load percentage of the UPS, and specifically, the load percentage is a ratio of an actual load power to a rated load power or a ratio of an actual load current to a rated load current;
a low-pass filter 2004, configured to filter a voltage difference signal $\Delta_v'$ adjusted by a coefficient, where a person skilled in the art can understand that the low-pass filter 2004 is not necessary, and may be omitted when signal noise is relatively low;
a PI regulator (i.e., a proportional-integral regulator) 2005, configured to perform proportional and integral adjustment on the filtered voltage difference signal to obtain an accurate current amplitude signal, where the PI regulator (i.e., the proportional-integral regulator) is a common linear controller, and the PI regulator processes the proportional and integral components of an error signal to generate a control signal and thereby implement accurate control of a controlled object, where the proportion (P) part directly generates a control output based on present deviation, and the integral (I) part focuses on accumulation of errors, to eliminate stable-state errors;
an amplitude limiting module 2006, configured to perform amplitude limiting processing on a current amplitude signal output by the PI regulator, to obtain a current effective value $i_{eff}$;
a multiplication module 2007, configured to multiply the current effective value $i_{eff}$ by a phase setpoint to obtain a current instantaneous instruction value $i_{ref}$ and provide the current instantaneous instruction value to the current loop control unit 1 as a current reference signal;
a load amount module 2008, configured to acquire a load amount of the UPS and provide the load amount to the coefficient adjustment module 2003; and
a phase setpoint module 2009, configured to provide a phase setpoint for the multiplication module 2007.

A working process of the coefficient adjustment module 2003 according to an embodiment of the present invention includes the following steps:

Step S1: Regularly collect a load amount of a UPS and determine whether a variation of the load amount is greater than or equal to a preset threshold (also referred to as a first preset threshold in the present invention). The variation of the load amount is an absolute value of a difference between a present load amount and a reference load amount. The reference load amount is a load amount at a zero moment, and the zero moment includes an initial zero moment of an entire working process (i.e., a zero moment of a first working cycle) and a zero moment of a new working cycle after a clock (also referred to as a timer) is reset in the working process (i.e., a zero moment of a subsequent working cycle). At the initial zero moment, the reference load amount is 0, a coefficient in the voltage loop control K=K0, preferably, K0=1; and at the zero moment after the clock is reset, the reference load amount is a present load at a clock reset moment, and the coefficient K in the voltage loop control is an updated coefficient at the clock reset moment. In the embodiment of the present invention, regularly collecting the load amount of the UPS means collecting the load amount of the UPS once at intervals of a first preset duration. Because an output power of a single-phase UPS fluctuates, it takes a half voltage cycle or one voltage cycle to obtain a stable value. Therefore, the load amount of the UPS is preferably collected once every half voltage cycle or every full voltage cycle.
Step S2: When the variation of the load amount is greater than or equal to the preset threshold, set the coefficient K to K0, use the present load amount as the reference load amount, reset the clock, and return to step S1. In this way, an updated coefficient K and an updated reference load amount are used in a new determining cycle.
Step S3: When the variation of the load amount is less than the preset threshold, continue to regularly collect the load amount of the UPS and determine whether a duration in which the variation of the load amount is less than the preset threshold is greater than or equal to a second preset duration. Preferably, the second preset duration is greater than or equal to ten times the first preset duration.
Step S4: When the duration in which the variation of the load amount is less than the preset threshold is greater than or equal to the second preset duration that starts timing at the zero moment, calculate the coefficient K based on the present load amount, use the present load amount as the reference load amount, reset the clock, and return to step S1. In this way, an updated coefficient K and an updated reference load amount are used in the new determining cycle.
Step S5: When the duration in which the variation of the load amount is less than the preset threshold is less than the second preset duration that starts timing at the zero moment, continue to regularly collect the load amount of the UPS, determine whether the variation of the load amount is greater than or equal to the preset threshold, and repeat steps S2 to S4.

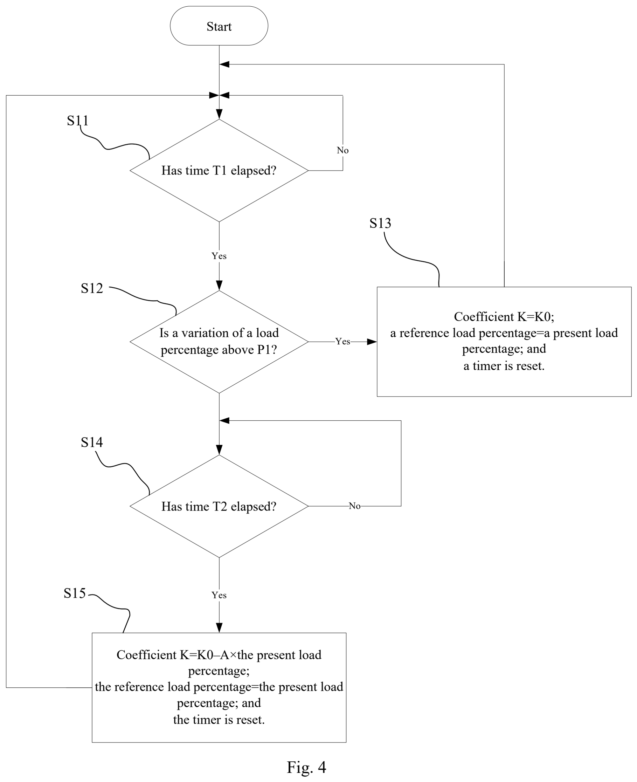

According to another embodiment of the present invention, the coefficient K is adjusted based only on a comparison between the variation of the load amount and the preset threshold regardless of duration of the variation of the load amount, where when the variation of the load amount is greater than or equal to the preset threshold, the coefficient K is set to an initial coefficient to update the coefficient K; and when the variation of the load amount is less than the preset threshold, the coefficient K is calculated and updated based on to the present load amount.
According to still another embodiment of the present invention, the coefficient adjustment module 2003 performs coefficient adjustment for voltage loop control based on a load percentage. The load amount module 2008 converts an obtained load current or load power of the UPS into a load percentage and provides the load percentage to the coefficient adjustment module 2003. Referring to a schematic working flowchart of the coefficient adjustment module 2003 according to the embodiment of the present invention shown in Fig. 4, a working process of the coefficient adjustment module 2003 includes the following steps:

Step S11: Monitor a timer to determine whether a first preset duration T1 has elapsed, where preferably, the first preset duration T1 is a half cycle or one cycle of an output voltage of the UPS; preferably, the UPS in the embodiment of the present invention supports a mains frequency of 40 Hz to 70 Hz, and in a CVCF mode, a frequency of the output voltage of the UPS is 50 Hz or 60 Hz, and corresponding UPS output voltage cycles are 20 milliseconds and 16.7 milliseconds respectively;

Step S12: When the first preset duration T1 has elapsed, collect a load percentage of the UPS and determine whether a variation of the load percentage is greater than or equal to a preset threshold (also referred to as a second preset threshold in the present invention) P1, where the variation of the load percentage is an absolute value of a difference between a present load percentage Pc and a reference load percentage Pt, and preferably, P1 is 2% to 20%;

Step S13: When the variation of the load percentage is greater than or equal to the preset threshold P1, set the coefficient K to K0, use the present load percentage Pc as the reference load percentage Pt, reset the clock, and return to step S11, in this way, an updated coefficient K and an updated reference load amount are used in a new determining cycle, where K0 is a coefficient at an initial zero moment, also referred to as an initial coefficient;

Step S14: When the variation of the load percentage is less than the preset threshold P1, continue to monitor the timer, and determine whether a second preset duration T2 has elapsed, where preferably, the second preset duration T2 is greater than or equal to ten times the first preset duration T1, and more preferably, the second preset duration T2 is greater than or equal to ten times the first preset duration T1 and is less than one second; and

Step S15: When a duration in which the variation of the load percentage is less than the preset threshold P1 lasts for at least the second preset duration T2, recalculate the coefficient K based on the present load percentage Pc, use the present load percentage Pc as the reference load percentage Pt, reset the clock, and return to step S11, in this way, an updated coefficient K and an updated reference load percentage are used in a new determining cycle,

where $K=K0-A\times$ the present load percentage, that is, $K=K0-A\times Pc$, the coefficient K is linearly related to the present load percentage Pc, K and Pc change inversely, K decreases when Pc increases, and K increases when Pc decreases,

where A is a conversion parameter (also referred to as a "slope parameter"), and

$A=K0/Pm$, where Pm is the maximum load percentage allowed by a UPS system, and generally $120\%\leq Pm\leq 200\%$, preferably Pm=150%. Preferably, in a calculation process, if the present load percentage Pc is greater than 100%, the calculation is performed with Pc=100%.

Substitute $A=K0/Pm$ into the formula $K=K0-A\times Pc$ to obtain:

$$K=K0-Pc\times K0/Pm=K0\times\left(\frac{Pm-Pc}{Pm}\right).$$

Therefore, the coefficient K is obtained based on the initial coefficient K0, the maximum load percentage Pm, and the present load percentage Pc.

According to the embodiment of the present invention, preferably, the foregoing preset threshold, including the foregoing first preset threshold for the variation of the load amount and the foregoing second preset threshold for the variation of the load percentage, is determined based on accuracy of calculation of the load amount. The second preset threshold is used as an example. If the accuracy of calculation of the load amount is 1%, the second preset threshold is generally 2% to 20%, and preferably 5% or 10% in engineering.

In the control method of the PFC circuit in the embodiment of the present invention, the coefficient K in the voltage loop control is dynamically adjusted based on a value and a duration of the load amount, which can resolve a problem that a steady-state harmonic current and a dynamic input current of the UPS are excessively large in the CVCF mode.

The control method of the PFC circuit in the embodiment of the present invention is not only applicable to a UPS, but also applicable to any other electrical equipment that is well-known in the art and that includes an AC-DC conversion circuit. An electrical equipment that uses the control method of the PFC circuit in the present invention is within the protection scope of the present invention.

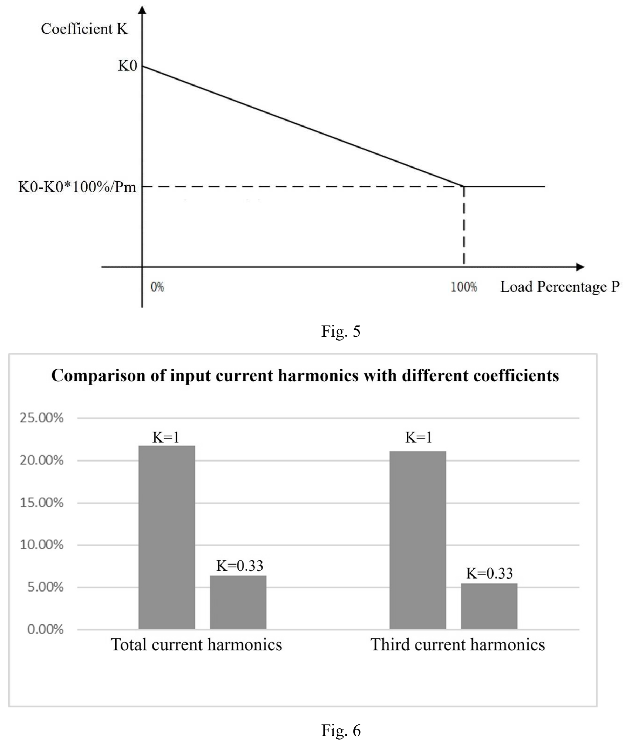

To reflect an effect of the control method of the PFC circuit in the embodiment of the present invention, the inventor performs an actual test, where the maximum load percentage Pm allowed by the UPS is 150%, the coefficient K for the voltage loop control is equal to 0.33 when the load percentage P (i.e., the present load percentage Pc) is 100%, and the coefficient K for the voltage loop control is equal to K0=1.0 when the load percentage P is 0. Refer to the diagram of the relationship between the coefficient K and the load percentage P in this example of the present invention shown in Fig. 5. When the load percentage changes from 0% to 150%, the inventor uses a fixed coefficient K=1 and a fixed coefficient K=0.33 to test current harmonics. Fig. 6 shows a test result of input current harmonics at a 230 V/60 Hz input voltage, a 230 V/50 Hz output voltage, and a 100% RCD load. It can be learned from the test result that reducing the coefficient can reduce input current harmonics at full load by about 70% and reduce the main third current harmonics by about 74%.

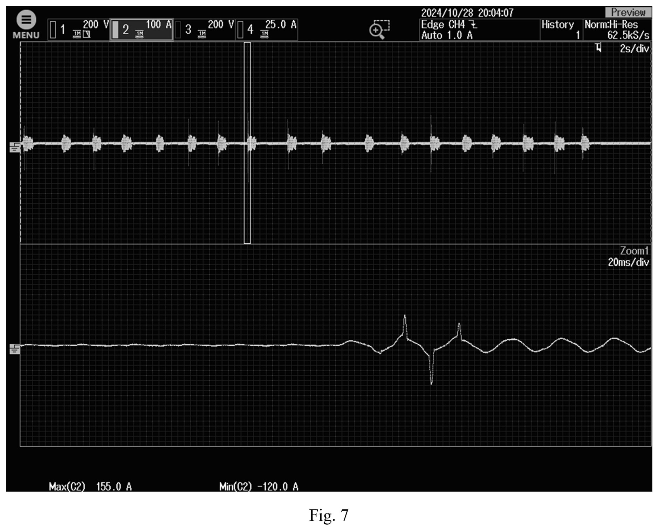

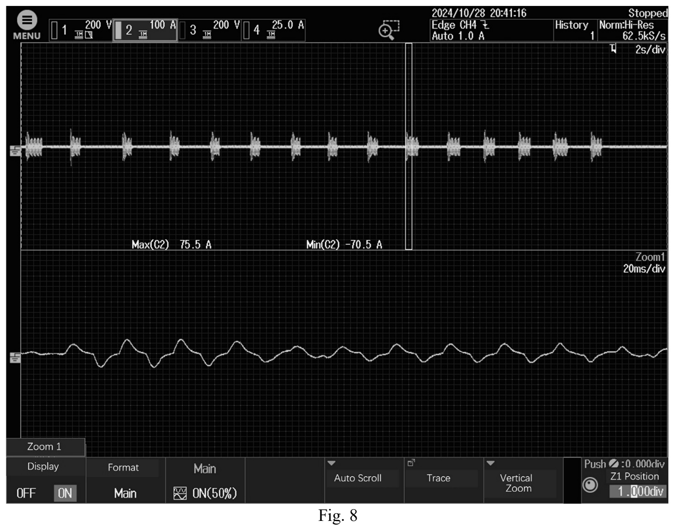

However, the inventor also found that using a smaller coefficient would cause a larger input current. Fig. 7 is an input current waveform when a 113% RCD load is frequently loaded and unloaded with a coefficient K=0.33. It can be learned from the figure that the maximum input current reaches 155 A. Fig. 8 is an input current waveform when a 113% RCD load is frequently loaded and unloaded with a coefficient K=1. It can be learned from the figure that the maximum input current is only 75.5 A, which is about 50% lower than the maximum input current in Fig. 7. It should be noted that the 113% RCD load is only a test example randomly selected.

Therefore, in the PFC control method provided in the present invention, a coefficient is dynamically adjusted, and the coefficient dynamically changes between a maximum value and a minimum value based on the load amount of the UPS, so that a maximum value of an input current can be reduced on a basis of reducing current harmonics, a requirement on a switching component is greatly reduced, and hardware costs are reduced.

Another embodiment of the present invention provides a power converter, including an AC-DC conversion circuit and a controller configured to control the AC-DC conversion circuit. A working principle of the controller is the same as that of the foregoing PFC circuit, and details are not described herein again.

In another embodiment of the present invention, a computer-readable storage medium is further provided. Computer programs or executable instructions are stored on the computer-readable storage medium. When the computer programs or the executable instructions are executed, the technical solutions as described in the foregoing embodiments are implemented. Implementation principles are similar, and details are not described herein again. In the embodiment of the present invention, the computer-readable storage medium may be any tangible medium that can store data and may be read by a computing apparatus. Examples of the computer-readable storage medium include a hard disk drive, a network attached storage (NAS), a read-only memory, a random access memory, a CD-ROM, a CD-R, a CD-RW, a magnetic tape, and another optical or non-optical data storage apparatus. The computer-readable storage medium may also include a computer-readable medium distributed on a network-coupled computer system, so that computer programs or instructions may be stored and executed in a distributed manner.

In still another embodiment of the present invention, an electronic device is further provided, including a processor and a memory, where the memory is configured to store executable instructions that can be executed by the processor, the processor is configured to execute the executable instructions stored on the memory, and when the executable instructions are executed, the technical solution described in any one of the foregoing embodiments is implemented. Implementation principles are similar, and details are not described herein again.

The reference to "various embodiments", "some embodiments", "one embodiment", "an embodiment", or the like in the specification means that specific features, structures, or properties described with reference to the embodiments are included in at least one embodiment. Therefore, the phrase "in various embodiments", "in some embodiments", "in one embodiment", "in an embodiment", or the like does not necessarily refer to the same embodiment throughout the specification. In addition, the specific features, structures, or properties may be combined in any suitable manner in one or more embodiments. Therefore, the specific features, structures, or properties shown or described with reference to one embodiment may be combined, in whole or in part without limitation, with the features, structures, or properties of one or more other embodiments, provided that the combination is not non-logical or inoperable.

The terms "include" and "have" as well as term expressions with a similar meaning in the specification are intended to cover a non-exclusive inclusion, for example, a process, a method, a system, a product, or a device that includes a series of steps or units is not limited to the listed steps or units, but optionally further includes an unlisted step or unit, or optionally further includes another step or unit inherent to the process, the method, the product, or the device. "A", "An" or "one" does not exclude multiple cases. In addition, the elements in the accompanying drawings of the present application are merely used for schematic description, and are not drawn to scale.

Although the present invention has been described by using preferred embodiments, the present invention is not limited to the embodiments described herein, and includes various changes and variations without departing from the scope of the present invention.

## Claims

1. A control method for an AC-DC conversion circuit of an electrical equipment, comprising voltage loop control and current loop control, **characterized in that** the voltage loop control provides a current instantaneous instruction value ($i_{ref}$) based on a comparison between a bus voltage sampled value ($V_{BUS}$) and a bus voltage set value ($V_{SET}$) of the AC-DC conversion circuit, the current loop control provides a PWM control signal for the AC-DC conversion circuit based on a comparison between an inductor current sampled value ($I_B$) of the AC-DC conversion circuit and the current instantaneous instruction value ($i_{ref}$), wherein the voltage loop control comprises a coefficient adjustment step, and the coefficient adjustment step dynamically adjusts a coefficient K in the voltage loop control based on a load amount of the electrical equipment.

2. The control method according to claim 1, wherein in the voltage loop control, the current instantaneous instruction value ($i_{ref}$) is provided based on a product of the coefficient K and a difference between the bus voltage sampled value ($V_{BUS}$) and the bus voltage set value ($V_{SET}$), and the coefficient K is dynamically adjusted based on a variation of the load amount of the electrical equipment.

3. The control method according to claim 2, wherein the coefficient adjustment step comprises:

   collecting a present load amount of the electrical equipment at intervals of a first preset duration, and determining whether a variation of the load amount is greater than or equal to a preset threshold;
   when the variation of the load amount is greater than or equal to the preset threshold, setting the coefficient K to an initial coefficient to update the coefficient K; and
   when the variation of the load amount is less than the preset threshold, calculating and updating the coefficient K based on the present load amount.

4. The control method according to claim 3, wherein the variation of the load amount is equal to an absolute value of a difference between the present load amount and a reference load amount.

5. The control method according to claim 3 or claim 4, wherein when the coefficient K is updated, the present load amount is used as an updated reference load amount for a next determining cycle.

6. The control method according to any one of claims 3 to 5, wherein when a duration in which the variation of the load amount is less than the preset threshold reaches a second preset duration, the coefficient K is calculated and updated based on the present load amount.

7. The control method according to any one of claims 1 to 6, wherein the load amount comprises a load power, a load current, and a load percentage of the electrical equipment.

8. The control method according to any one of claims 3 to 6, wherein when the variation of the load amount is less than the preset threshold, the coefficient K is calculated according to the following formula:

$$K=K0-A\times Pc,$$

   wherein K0 is the initial coefficient, Pc is the present load amount, and A is a conversion parameter,
   and wherein the conversion parameter is calculated according to the following formula:

$$A=K0/Pm,$$

   wherein Pm is a maximum load amount allowed by the electrical equipment.

9. The control method according to any one of claims 3 to 6, wherein the first preset duration is a half cycle or one cycle of an output voltage of the electrical equipment.

10. An electrical equipment, comprising an AC-DC conversion circuit and a controller for controlling the AC-DC conversion circuit, **characterized in that** the controller is configured to execute the control method according to any one of claims 1 to 9.

Fig. 1

Fig. 2

Fig. 3

Start

S11

Has time T1 elapsed? — No

Yes

S13

Coefficient K=K0;
a reference load percentage=a present load percentage; and
a timer is reset.

S12

Is a variation of a load percentage above P1? — Yes

S14

Has time T2 elapsed? — No

S15

Yes

Coefficient K=K0–A×the present load percentage;
the reference load percentage=the present load percentage; and
the timer is reset.

Fig. 4

Fig. 5

Comparison of input current harmonics with different coefficients

Fig. 6

Fig. 7

Fig. 8

# EUROPEAN SEARCH REPORT

**Application Number**

EP 26 15 0871

Europäisches
Patentamt
European
Patent Office
Office européen
des brevets

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2024/396473 A1 (PHADKE VIJAY G [US] ET AL) 28 November 2024 (2024-11-28) | 1,2,7,10 | INV. H02M1/12 |
| A | * figure 5A * <br> * figures 6-7 * <br> * paragraph [0049] - paragraph [0058] * <br> ----- | 3-6,8,9 | H02M1/42 H02M7/217 |
| A | SANGWONGWANICH ARIYA ET AL: "Interharmonics from grid-connected PV systems: Mechanism and mitigation", 2017 IEEE 3RD INTERNATIONAL FUTURE ENERGY ELECTRONICS CONFERENCE AND ECCE ASIA (IFEEC 2017 - ECCE ASIA) IEEE, 3 June 2017 (2017-06-03), pages 722-727, XP033129598, DOI: 10.1109/IFEEC.2017.7992128 [retrieved on 2017-07-25] <br> * figure 3 * <br> * figure 7 * <br> * page 725 * <br> ----- | 1-10 | |
| A | US 9 966 841 B2 (TEXAS INSTRUMENTS INC [US]) 8 May 2018 (2018-05-08) <br> * figure 2B * <br> * column 2, line 51 - column 3, line 67 * <br> ----- | 1-10 | **TECHNICAL FIELDS SEARCHED (IPC)** <br><br> H02M |

The present search report has been drawn up for all claims

| Place of search | Date of completion of the search | Examiner |
|---|---|---|
| The Hague | 6 May 2026 | Riehl, Philippe |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

...................................................................................

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 26 15 0871

This annex lists the patent family members relating to the patent documents cited in the above-mentioned European search report.
The members are as contained in the European Patent Office EDP file on
The European Patent Office is in no way liable for these particulars which are merely given for the purpose of information.

06-05-2026

| Patent document cited in search report | Publication date | Patent family member(s) | Publication date |
|---|---|---|---|
| US 2024396473 A1 | 28-11-2024 | NONE | |
| US 9966841 B2 | 08-05-2018 | US 2016344281 A1 | 24-11-2016 |
| | | WO 2016187343 A1 | 24-11-2016 |

EPO FORM P0459

For more details about this annex : see Official Journal of the European Patent Office, No. 12/82